# FASCICULE DE BREVET EUROPEEN

(11) **EP 0 406 125 B1**
(45) Date de publication et mention de la délivrance du brevet: **25.08.1993**
(21) Numéro de dépôt: 90401904.9
(22) Date de dépôt: 29.06.1990
(51) Int. Cl.: A47J 31/44

(54) **Couvercle pour récipient collecteur d'infusion**
Deckel für Aufnahmebehälter für Infusionen
Lid for an infusion receiving container

(30) Priorité: 30.06.1989 FR 8908764
(43) Date de publication de la demande: 02.01.1991
(73) Titulaire: MOULINEX, F-93170 Bagnolet (FR)
(72) Inventeur: Landais, Francis Pierre Jacques, F-61000 Alençon (FR); Clech, Jean-René, F-61000 Alençon (FR)
(74) Mandataire: May, Hans Ulrich, Dr.

(56) Documents cités:
- DE-A- 2 540 211
- DE-U- 8 810 770
- JP-A-61 119 141
- US-A- 3 935 805

## Description

L'invention se rapporte aux couvercles pour récipients collecteurs d'infusion susceptibles d'être placés sous l'orifice de sortie d'un filtre d'une machine à infusion telle que par exemple une cafetière du type goutte-à-goutte et présentant dans leur paroi une ouverture par laquelle l'infusion pénétre dans le récipient.

De tels couvercles sont décrits notamment dans DE-A-2540211

L'invention concerne, plus précisément, un couvercle qui comporte des moyens de fermeture de l'ouverture permettant notamment de conserver pendant un temps assez long la température idéale et l'arôme de l'infusion récoltée.

Les moyens de fermeture connus doivent être convenablement manoeuvrés afin d'éviter de placer par inadvertance le récipient sous le filtre avec l'ouverture fermée, ce qui occasionnerait un débordement de l'infusion susceptible d'endommager la plaque chauffante électrique sur laquelle repose généralement, le récipient collecteur.

Selon l'invention, les moyens de fermeture comportent un obturateur dont la paroi, disposée transversalement à la direction de l'écoulement de l'infusion, présente plusieurs trous dont les dimensions sont déterminées de manière à, soit autoriser le libre écoulement de l'infusion au travers desdits trous, soit à présenter dans une phase finale de l'écoulement une résistance au passage de l'infusion à travers lesdits trous provoquée par un effet d'attachement de l'infusion au bord des trous, créant ainsi un joint liquide fermant automatiquement chaque trou.

Les moyens de fermeture ainsi réalisés se sont révélés efficaces et ne nécessitent aucune attention particulière de l'utilisateur. En outre, du fait que l'obturateur fonctionne sans pièce mécanique mobile, on comprendra que la fabrication du couvercle est particulièrement simple et économique.

Selon une autre caractéristique de l'invention, le couvercle étant destiné à fermer un récipient collecteur d'infusion de type isotherme, les moyens de fermeture comprennent en outre une organe de bouchage qui est monté mobile sur le couvercle et qui peut occuper soit une position dite de transport pour laquelle il recouvre de façon étanche l'obturateur, soit une position d'écoulement pour laquelle il permet le remplissage et/ou le vidage du récipient.

Ainsi, l'invention permet d'utiliser directement le récipient collecteur d'infusion comme récipient isotherme facilement transportable évitant ainsi tout transvasement entre récipients nuisible à la bonne conservation des qualités de l'infusion récoltée.

Les caractéristiques et avantages de l'invention ressortiront d'ailleurs de la description qui va suivre, à titre d'exemple, en référence aux dessins annexés dans lesquels :

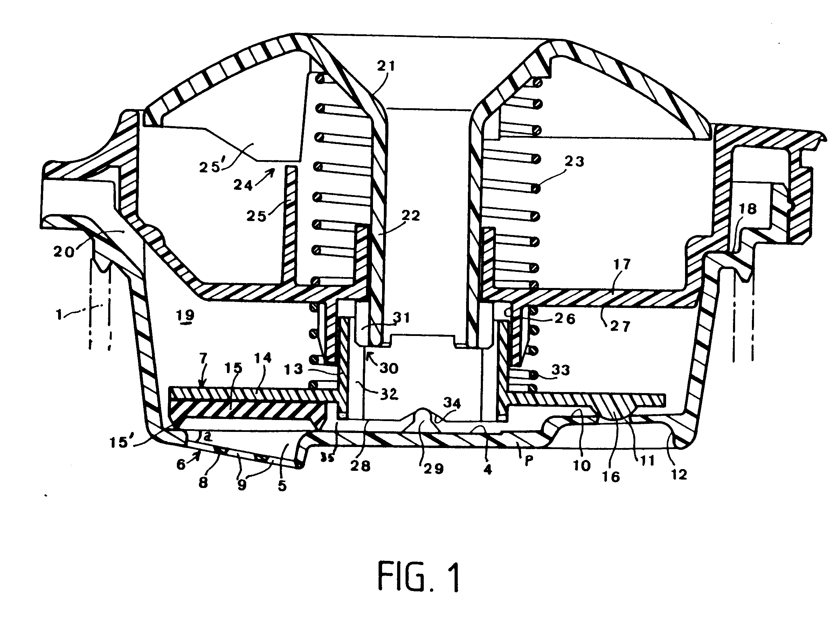

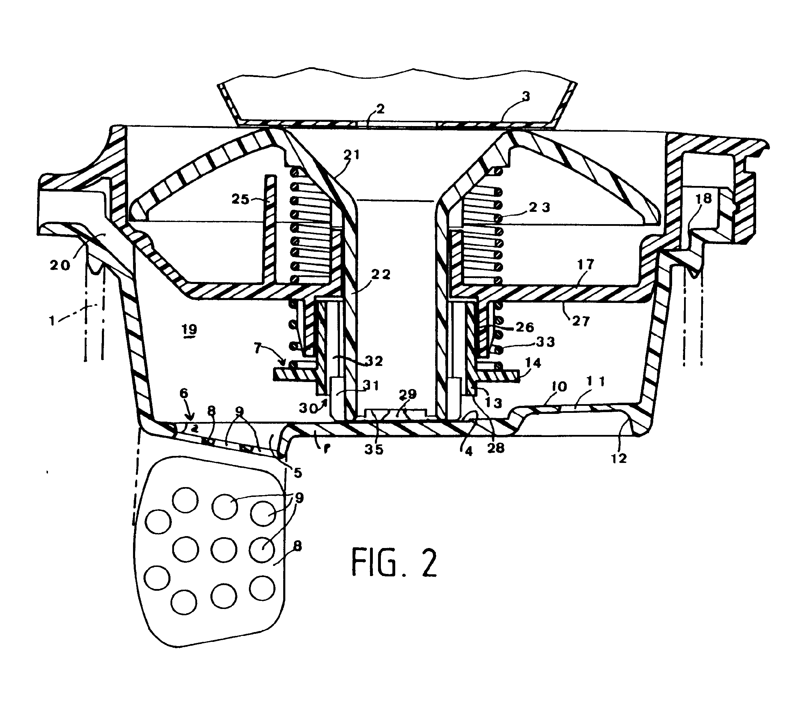

la figure 1 est une vue en coupe verticale d'un couvercle selon l'invention équipé d'un organe de bouchage illustré en position de transport ; la figure 2 est une vue analogue mais illustrant le couvercle placé sous un filtre avec l'organe de bouchage en position d'écoulement.

Le couvercle représenté est destiné à fermer un récipient collecteur d'infusion 1 (représenté en traits interrompus) du type isotherme susceptible d'être placé sous l'orifice de sortie 2 d'un filtre 3 (représenté schématiquement sur la figure 2) d'une machine à infusion telle qu'une cafetière du type goutte-à-goutte, et sa paroi P présente la forme générale d'une cuvette dont le fond 4 présente une ouverture 5 par laquelle l'infusion s'écoulant de la sortie 2 du filtre peut pénétrer dans le récipient, ladite ouverture 5 étant équipée de moyens de fermeture 6, 7 permettant notamment de conserver l'infusion récoltée à une température idéale.

Selon l'invention, les moyens de fermeture 6 comportent un obturateur dont la paroi 8, disposée transversalement à la direction de l'écoulement de l'infusion, présente plusieurs trous 9 dont les dimensions sont déterminées de manière à, soit autoriser le libre écoulement de l'infusion au travers desdits trous, soit à présenter dans une phase finale de l'écoulement une résistance au passage de l'infusion à travers lesdits trous provoquée par un effet d'attachement de l'infusion au bord des trous résultant de la tension superficielle et créant ainsi un joint liquide fermant automatiquement chaque trou 9. Par phase finale, on désigne la fin du débit de l'écoulement de l'infusion due, soit à l'arrêt de l'écoulement de l'infusion hors du filtre, soit à l'enlèvement du récipient de son logement dans la cafetière, soit à la fin du déversement de l'infusion hors du récipient.

Afin de mieux illustrer l'obturateur 6, on a représenté sur la figure 2, une vue de dessous de cet obturateur montrant la disposition des trous 9. Pour favoriser la création et le maintien des joints liquides dans les trous 9, la paroi 8 de l'obturateur présente une épaisseur comprise entre 0,2 et 1mm tandis que les trous présentent chacun un diamètre compris entre 1 et 6 mm. Les essais ont montré que lorsque le couvercle et l'obturateur sont réalisés d'une pièce en un matériau plastique, les meilleurs résultats sont obtenus avec une épaisseur de paroi de 0,8mm et des trous de 3mm de diamètre.

De plus, cette paroi 8 est agencée selon une pente formant un angle a avec l'horizontal compris entre 8 et 11 degrés et de préférence égal à 10 degrés.

Pour améliorer le remplissage du récipient isotherme 1, le fond 4 présente une surélévation 10 dans laquelle est pratiqué un petit orifice 11 situé à distance et au-dessus du niveau de l'obturateur 6 de manière à former un évent. Cette surélévation du fond 4 présente dans sa face inférieure une dépression 12 à bord rayonné empêchant le phénomène d'attachement de paroi.

Selon une autre caractéristique de l'invention, les moyens de fermeture 7 comprennent en outre une organe de bouchage qui est monté mobile sur le couvercle et qui peut occuper soit une position dite de transport (figure 1) pour laquelle il recouvre de façon étanche l'obturateur 6, soit une position d'écoulement pour laquelle il permet le remplissage et/ou le vidage du récipient 1.

Cet organe de bouchage 7 est monté rotatif autour d'un axe orthogonal au fond 4 du couvercle et comporte à cet effet un moyeu 13 solidaire d'un plateau transversal 14 qui porte un joint 15 à lèvre 15' adapté à venir couvrir l'obturateur 6 et un bouchon 16 adapté à venir boucher l'évent 11.

Pour améliorer la qualité isothermique de l'ensemble récipient et couvercle équipé de son organe de bouchage 7, et pour éviter des fuites lorsque ledit récipient est placé sous l'orifice de sortie 2 du filtre 3, l'invention prévoit que le couvercle comporte une contre-paroi 17 qui vient reposer pratiquement sur tout le bord 18 de la cuvette formant ainsi une chambre 19 et ménageant une goulotte d'écoulement 20 de l'infusion, et qui comprend dans sa région centrale un entonnoir 21 dont la cheminée 22 traverse ladite contre-paroi et qui est monté mobile verticalement à l'encontre d'un ressort 23, l'enfoncement de l'entonnoir 21 étant empêché en position de transport par un dispositif de verrouillage 24 interposé entre ledit entonnoir 21 et ladite contre-paroi 17.

Ce dispositif de verrouillage comporte une butée verticale 25 portée par la contre-paroi 17 et s'étendant selon un arc de cercle d'environ 90 degrés, tandis que l'entonnoir porte un doigt descendant 25' destiné à venir se placer au-dessus de la butée 25 pour la position de transport.

Le moyeu 13 de l'organe de bouchage 7 étant tubulaire, ce moyeu est monté concentriquement autour de la cheminée 22 dans un palier 26 solidaire de la face inférieure 27 de la contre-paroi 17, et son bord inférieur 28 vient reposer sur une crapaudine 29 solidaire du fond 4 de la cuvette, ladite cheminée 22 et ledit moyeu 13 comportant des organes d'accouplement mutuel 30 permettant le changement de position de l'organe de bouchage par rotation de l'entonnoir 21 autour de l'axe orthogonal.

Les organes d'accouplement mutuel 30 sont constitués par des ergots latéraux 31 portés par la cheminée 22 et des rainures 32 correspondantes pratiquées dans le moyeu 13.

Afin d'obtenir une bonne étanchéité du joint 15 sur le pourtour de l'obturateur 6 et du bouchon 16 sur l'orifice 11, l'organe de bouchage 7 est monté également mobile en hauteur, à l'encontre d'un ressort 33 interposé entre le plateau transversal 14 et la face inférieure 27 de la contre-paroi, au moyen d'au moins deux encoches 34 symétriques par rapport à l'axe orthogonal et pratiquées dans le bord inférieur 28 du moyeu, et la crapaudine 29 est formée par au moins deux pions symétriques agencés de telle sorte que lorsque les encoches 34 viennent en correspondance avec les pions 29, l'organe de bouchage vient occuper une position basse assurant une bonne fermeture de l'obturateur 6 et de l'évent 11.

Le fonctionnement de ce couvercle équipé de son organe de bouchage va maintenant être expliqué plus en détail.

On suppose qu'au départ l'organe de bouchage 7 est en sa position de transport (figure 1). L'utilisateur fait tourner l'entonnoir 21 de manière à venir placer le doigt 25′ au delà de la butée 25. Au cours de ce mouvement de rotation, les ergots 31 viennent en prise avec les rainures 32 entraînant en rotation le moyeu 13 qui se soulève sous l'effet du glissement de son bord inférieur 28 sur les pions 29 et qui dégage le joint 15 de l'obturateur 6 et le bouchon 16 de l'évent 11.

L'organe de bouchage étant maintenant en position d'écoulement, l'utilisateur peut insérer le récipient entre le filtre 3 et la plaque chauffante (non représentée). Comme la hauteur du récipient équipé de son organe de bouchage a été choisie légèrement supérieure à la distance filtre/plaque chauffante des cafetières classiques, l'entonnoir 21 s'enfonce légèrement et sous l'effet du ressort 23 reste appliqué de façon étanche sous ledit filtre.

Dès ce moment l'infusion sortant de l'orifice de sortie 2,s'écoule par la cheminée 22, puis via l'espace 35 passe au travers des trous 9 de l'obturateur. Lorsque l'écoulement de l'infusion vient à s'arrêter (phase finale de l'infusion), une pellicule de liquide s'attache à la paroi de l'obturateur pour former sur les trous 9 un joint liquide. Ainsi, on obtient la fermeture automatique de l'obturateur 6 préservant l'arôme et la température de l'infusion contenue dans le récipient.

Lorsque l'on désire verser l'infusion dans les tasses, on incline le récipient 1, l'infusion brise le joint liquide et passe au travers de trous 9 pour s'écouler par la goulotte 20. Au contraire, dès que l'on arrête de verser l'infusion, le joint liquide se forme de nouveau sur chaque trou.

On comprendra que si l'on veut mettre l'organe de bouchage en position de transport, il suffit d'effectuer une rotation contraire pour amener le doigt 25′ au-dessus de la butée 25, ce qui provoque en même temps le retour dudit organe en la position illustrée à la figure 1.

## Revendications

1. Couvercle pour récipient collecteur d'infusion (1) susceptible d'être placé sous l'orifice de sortie (2) d'un filtre (3) d'une machine à infusion et présentant dans sa paroi P une ouverture (5) par laquelle l'infusion pénétre dans le récipient (1), ainsi que des moyens de fermeture (6, 7) de cette ouverture permettant notamment de conserver l'infusion récoltée à une température idéale,
**caractérisé en ce que** les moyens de fermeture (6) comportent un obturateur dont la paroi (8), disposée transversalement à la direction de l'écoulement de l'infusion, présente plusieurs trous (9) dont les dimensions sont déterminées de manière à, soit autoriser le libre écoulement de l'infusion au travers desdits trous, soit à présenter dans une phase finale de l'écoulement une résistance au passage de l'infusion à travers lesdits trous provoquée par un effet d'attachement de l'infusion au bord des trous, créant ainsi un joint liquide fermant automatiquement chaque trou.

2. Couvercle selon la revendication 1,
**caractérisé en ce que** la paroi (8) de l'obturateur présente une épaisseur comprise entre 0,2 et 1mm et de préférence égale à 0,8mm, tandis que les trous présentent chacun un diamètre compris entre 1 et 6 mm et de préférence égal à 3mm.

3. Couvercle selon la revendication 1 ou 2,
**caractérisé en ce que** la paroi (8) de l'obturateur est agencée selon une pente formant un angle avec l'horizontal compris entre 8 et 11 degrés et de préférence égal à 10 degrés.

4. Couvercle selon l'une quelconque des revendications précédentes,
**caractérisé en ce qu'**il présente la forme générale d'une cuvette dont le fond (4) comporte l'obturateur ainsi qu'un petit orifice (11) qui est situé à distance et au-dessus du niveau de l'obturateur de manière à former un évent.

5. Couvercle selon l'une quelconque des revendications précédentes,
**caractérisé en ce qu'**étant destiné à fermer un récipient collecteur d'infusion (1) de type isotherme, les moyens de fermeture (7) comprennent en outre une organe de bouchage qui est monté mobile sur le couvercle et qui peut occuper soit une position dite de transport pour laquelle il recouvre de façon étanche l'obturateur (6), soit une position d'écoulement pour laquelle il permet le remplissage et/ou le vidage du récipient (1).

6. Couvercle selon les revendications 4 et 5,
**caractérisé en ce qu**e l'organe de bouchage (7) est monté rotatif autour d'un axe orthogonal au fond (4) du couvercle et comporte à cet effet un moyeu (13) solidaire d'un plateau transversal (14) qui porte un joint (15) adapté à venir couvrir l'obturateur (6) et un bouchon (16) adapté à venir boucher l'évent (11).

7. Couvercle selon la revendication 6,
**caractérisé en ce qu'**il comporte une contre-paroi (17) qui vient reposer pratiquement sur tout le bord (18)de la cuvette formant ainsi une chambre (19) et ménageant une goulotte d'écoulement (20) de l'infusion, et qui comprend dans sa région centrale un entonnoir (21) dont la cheminée (22) traverse ladite contre-paroi et qui est monté mobile verticalement à l'encontre d'un ressort (23), l'enfoncement de l'entonnoir (21) étant empêché en position de transport par un dispositif de verrouillage (24) interposé entre ledit entonnoir (21) et ladite contre-paroi (17).

8. Couvercle selon la revendication 7,
**caractérisé en ce que** le moyeu (13) de l'organe de bouchage (7) étant tubulaire, ce moyeu est monté concentriquement autour de la cheminée (22) dans un palier (26) solidaire de la face inférieure (27) de la contre-paroi (17) et son bord inférieur (28) vient reposer sur une crapaudine (29) solidaire du fond (4) de la cuvette, ladite cheminée (22) et ledit moyeu (13) comportant des organes d'accouplement mutuel (30) permettant le changement de position de l'organe de bouchage par rotation de l'entonnoir (21) autour de l'axe orthogonal.

9. Couvercle selon la revendication 8,
**caractérisé en ce que** les organes d'accouplement mutuel (30) sont constitués par des ergots latéraux (31) portés par la cheminée (22) et des rainures (32) correspondantes pratiquées dans le moyeu (13).

10. Couvercle selon la revendication 9,
**caractérisé en ce que** l'organe de bouchage (7) est monté également mobile en hauteur, à l'encontre d'un ressort (33) interposé entre le plateau transversal (14) et la face inférieure (27) de la contre-paroi, au moyen d'au moins deux encoches (34) pratiquées dans le bord inférieur (28) du moyeu, et la crapaudine (29) est formée par au moins deux pions symétriques agencés de telle sorte que lorsque les encoches (34) viennent en correspondance avec les pions (29), l'organe de bouchage vient occuper une position basse assurant une bonne fermeture de l'obturateur (6) et de l'évent (11).

## Patentansprüche

1. Deckel für einen Auffangbehälter für Aufgüsse (1), der unter die Auslaßöffnung (2) eines Filters (3) einer Aufgußmaschine gestellt werden kann und in seiner Wand (P) eine Öffnung (5), durch welche der Aufguß in den Auffangbehälter (1) läuft, sowie eine Verschlußvorrichtung (6,7) für diese Öffnung aufweist, welche insbesondere ermöglicht, den aufgefangenen Aufguß bei einer idealen Temperatur zu halten, **dadurch gekennzeichnet,** daß die Verschlußvorrichtung einen Verschlußteil (6) aufweist, dessen Wand (8) quer zur Ausflußrichtung des Aufgusses gerichtet ist und mehrere Löcher (9) aufweist, deren Abmessungen so bestimmt sind, daß sie entweder den freien Ausfluß des Aufgusses durch diese Löcher ermöglichen oder in einer Endphase des Ausflusses dem Durchtritt des Aufgusses durch die Löcher einen Widerstand entgegensetzen, der durch einen Effekt des Anhaftens des Aufgusses an den Rändern der Löcher bewirkt ist, wodurch eine flüssige Dichtung erzeugt,wird, welche automatisch jedes Loch schließt.

2. Deckel nach Anspruch 1, dadurch gekennzeichnet, daß die Wand (8) des Verschlußteils eine Dicke zwischen 0,2 und 1 mm und vorzugsweise gleich 0,8 mm aufweist, während die Löcher jedes einen Durchmesser zwischen 1 und 6 mm und vorzugsweise gleich 3 mm aufweisen.

3. Deckel nach Anspruch 1 oder 2, dadurch gekennzeichnet, daß die Wand (8) des Verschlußteils mit einer Neigung ausgebildet ist, die mit der Horizontalen einen Winkel zwischen 8 und 11 Grad und vorzugsweise gleich 10 Grad bildet.

4. Deckel nach einem der vorangehenden Ansprüche, dadurch gekennzeichnet, daß er die allgemeine Form einer Schale aufweist, deren Boden (4) den Verschlußteil sowie eine kleine Öffnung (11) aufweist, die in einem Abstand oberhalb des Niveaus des Verschlußteils liegt, um eine Entlüftungsöffnung zu bilden.

5. Deckel nach einem der vorangehenden Ansprüche, dadurch gekennzeichnet, daß er zum Verschließen eines wärmeisolierten Auffangbehälters (1) für den Aufguß bestimmt ist und die Verschlußvorrichtung außerdem ein Verschlußelement (7) aufweist, das am Deckel beweglich montiert ist und entweder eine sogenannte Transportstellung einnehmen kann,in der es den Verschlußteil (6) dicht abdeckt, oder eine Ausgußstellung einnehmen kann, in welcher es das Füllen und/oder Leeren des Auffangbehälters (1) ermöglicht.

6. Deckel nach den Ansprüchen 4 und 5, dadurch gekennzeichnet, daß das Verschlußelement (7) um eine zum Boden (4) des Deckels rechtwinklige Achse drehbar montiert ist und zu diesem Zweck eine Nabe (13) aufweist, die mit einer Querplatte (14) fest verbunden ist, die eine Dichtung (15), welche den Verschlußteil (6) abdecken kann, und einen Stopfen (16), der die Entlüftungsöffnung (11) abdecken kann, trägt.

7. Deckel nach Anspruch 6, dadurch gekennzeichnet, daß er eine Gegenwand (17) aufweist, die praktisch auf dem ganzen Rand (18) der Schale aufliegt und so eine Kammer (19) und eine Ausgußrinne (20) für den Aufguß bildet, und der in seinem Mittelbereich einen Trichter (21) aufweist, dessen Hals (22) die Gegenwand durchsetzt und gegen die Wirkung einer Feder (23) vertikal beweglich gehalten ist, wobei das Eindrücken des Trichters (21) in der Transportstellung durch eine zwischen den Trichter (21) und die Gegenwand (17) eingeschaltete Verriegelungsvorrichtung (24) verhindert wird.

8. Deckel nach Anspruch 7, dadurch gekennzeichnet, daß die Nabe (13) des Verschlußelements (7) rohrförmig und konzentrisch um den Hals (22) in einem mit der Unterseite (27) der Gegenwand (17) fest verbundenen Lager (26) montiert ist und ihre Unterkante (28) auf einem mit dem Boden (4) der Schale fest verbundenen Lagerzapfen (29) aufliegt, wobei der Hals (22) und die Nabe (13) Kupplungselemente (30) zur gegenseitigen Kupplung aufweisen, welche die Veränderung der Stellung des Verschlußelements durch Drehung des Trichters (21) um die rechtwinklige Achse ermöglichen.

9. Deckel nach Anspruch 8, dadurch gekennzeichnet, daß die gegenseitigen Kupplungselemente (30) aus seitlichen Zapfen (31), die vom Hals (22) getragen sind, und in der Nabe (13) ausgebildeten entsprechenden Nuten (32) bestehen.

10. Deckel nach Anspruch 9, dadurch gekennzeichnet, daß das Verschlußelement (7) gegen die Wirkung einer zwischen der Querplatte (14) und der Unterseite (27) der Gegenwand eingesetzten Feder (33) höhenbeweglich montiert ist mittels mindestens zweier Ausnehmungen (34), die in der Unterkante (28) der Nabe ausgebildet sind, und daß der Lagerzapfen (29) durch mindestens zwei Zapfen gebildet ist, die symmetrisch so angeordnet sind, daß wenn sie in Übereinstimmung mit den Ausnehmungen (34) kommen, das Verschlußelement eine tiefe Stellung einnimmt, welche einen guten Verschluß des Verschlußteils (6) und der Entlüftungsöffnung (11) gewährleistet.

## Claims

1. A lid for an infusion collecting vessel (1) which can be placed beneath the outlet aperture (2) of a filter (3) of an infusion machine and having in its wall P an aperture (5) through which the infusion penetrates into the vessel (1), as well as closing means (6, 7) for this aperture which in particular enable the infusion yielded to be kept at an ideal temperature,
**characterised in that** the closing means (6) comprise an obturator, the wall (8) of which, disposed at right angles to the flow direction of the infusion, comprises several holes (9), the dimensions of which are determined in such manner as either to permit infusion to flow freely through said holes, or to have in a final flow phase a resistance to the passage of the infusion through said holes caused by an action by which the infusion is attached to the edge of the holes, thus creating a liquid seal automatically closing each hole.

2. A lid according to Claim 1,
**characterised in that** the wall (8) of the obturator has a thickness of between 0.2 and 1 mm and preferably equal to 0.8 mm, whereas each hole has a diameter of between 1 and 6 mm and preferably of 3 mm.

3. A lid according to Claim 1 or 2,
**characterised in that** the wall (8) of the obturator is designed along a slope forming an angle with the horizontal of between 8 and 11 degrees and preferably of 10 degrees.

4. A lid according to any one of the preceding Claims,
**characterised in that** it has the general shape of a basin, the base (4) of which comprises the obtura!or and also a small orifice (11) which is situated at a distance above the level of the obturator so as to form a vent.

5. A lid according to any one of the preceding Claims,
**characterised in that** as it is intended to close an infusion collecting vessel (1) of the isothermal type, the closing means (7) also comprise a sealing device which is movably mounted on the lid and which can occupy either a position known as the transport position, for which it tightly covers the obturator (6), or a flow position, for which it permits the filling and/or the emptying of the vessel (1).

6. A lid according to Claims 4 and 5,
**characterised in that** the sealing device (7) is rotationally mounted around an orthogonal axis at the base (4) of the lid and for this purpose comprises a hub (13) integral with a transverse plate (14) which bears a seal (15) adapted to come to cover the obturator (6) and a cap (16) adapted to come to block the vent (11).

7. A lid according to Claim 6,
**characterised in that** it comprises an internal wall (17) which comes to rest practically over the entire edge (18) of the basin thus forming a chamber (19) and providing a discharge spout (20) for the infusion, and which in its central region contains a funnel (21), the shaft (22) of which passes through said internal wall and which is mounted so that it can be moved vertically in opposition to a spring (23), the forced opening of the funnel (21) being prevented in the transport position by a locking device (24) placed between said funnel (21) and said internal wall (17).

8. A lid according to Claim 7,
**characterised in that** as the hub (13) of the sealing device (7) is tubular, this hub is mounted concentrically around the shaft (22) in a bearing (26) integral with the lower face (27) of the internal wall (17) and its lower edge (28) comes to rest on a pivot bearing (29) integral with the base (4) of the basin, said shaft (22) and said hub (13) comprising mutual coupling devices (30) enabling the sealing device to change position by rotating the funnel (21) around the orthogonal axis.

9. A lid according to Claim 8,
**characterised in that** the mutual coupling devices (30) are formed by lateral tappets (31) borne by the shaft (22) and corresponding grooves (32) made in the hub (13).

10. A lid according to Claim 9,
**characterised in that** the sealing device (7) is also mounted so that it is vertically adjustable, in opposition to a spring placed between the transverse plate (14) and the lower face (27) of the internal wall, by means of at least two recesses (34) made in the lower edge (28) of the hub, and the pivot bearing (29) is formed by at least two symmetrical pawns designed so that when the recesses (34) come to connect with the pawns (29), the sealing device comes to occupy a low position ensuring that the obturator (6) and the vent (11) close properly.
